# EUROPÄISCHE PATENTSCHRIFT

(11) **EP 0 152 066 B1**
(45) Veröffentlichungstag und Bekanntmachung des Hinweises auf die Patenterteilung: **28.07.1993**
(21) Anmeldenummer: 85101296.3
(22) Anmeldetag: 07.02.1985
(51) Int. Cl.: G01N 27/90

(54) **Verfahren und Durchführungsanordnung zum Prüfen und/oder Messen elektrisch leitender Prüfgegenstände**
Method and system for testing and/or measuring electrically conductive test objects
Procédé et méthode pour le contrôle ou la mesure d'objets électriquement conducteurs

(30) Priorität: 10.02.1984 SE 8400698
(43) Veröffentlichungstag der Anmeldung: 21.08.1985
(73) Patentinhaber: TÖRNBLOMS KVALITETSKONTROLL AB, S-725 92 Västeras (SE)
(72) Erfinder: Törnblom, Bengt Hjalmar, S-725 92 Västeras (SE)
(74) Vertreter: Boecker, Joachim, Dr.-Ing.

(56) Entgegenhaltungen:
- FR-A- 2 459 475
- GB-A- 2 041 535
- US-A- 3 974 442

## Beschreibung

Die vorliegende Erfindung betrifft ein Verfahren und eine Durchführungsanordnung zum Prüfen und/oder Messen elektrisch leitender Prüfgegenstände gemäß dem Oberbegriff des Anspruches 1. Ein solches Verfahren und eine solche Anordnung sind im wesentlichen aus der GB-A-2 041 535 bekannt.

Bei der Fehlerfeststellung von Material beispielsweise durch Wirbelstrommessung besteht ein Problem darin, daß der Meßwert stark von dem Abstand zwischen dem Meßgeber und dem Prüfobjekt abhängig ist. Diese sogenannte Abstandsabhängigkeit oder "LO-Abhängigkeit" (abgeleitet von "lift -off"- Abhängigkeit) stört die Messungen oft so stark, daß das eigentliche Fehlersignal, das beispielsweise von einem Riß in der Oberfläche des Prüfgegenstandes herrühren kann, überdeckt wird.

Ein Verfahren zur Unterdrückung der LO-Abhängigkeit wird in dem SE-PS 7507857, einschließlich Zusatzpatent, beschrieben.

Ein ähnliches Verfahren wird beschrieben von Hugo L. Libby in "Introduction to Electomagnetic Nondestructive Test Methods", und eine Variante dieses Verfahrens wird beschrieben in der US-PS 4 303 885.

Alle diese bekannten Verfahren beruhen darauf, daß mindestens zwei verschiedene Trägerfrequenzen verwendet werden und daß Informationen von den betreffenden Frequenzen miteinander kombiniert werden, um unerwünschte Signale oder Einflüsse variabler Größen zu unterdrücken.

Die vorgenannten und ähnliche bekannte Verfahren werden in ihrer Verwendbarkeit dadurch begrenzt, daß sie mit größerer Genauigkeit nur in einem sehr begrenzten LO-Bereich arbeiten.

Ein Verfahren der vorgenannten Art ist auch aus der GB-A-2 041 535 bekannt. Hier wird eine Kompensation des LO-Signals durchgeführt, bevor dieses auf den Verstärker zur Verstarkung des Gebersignals geschaltet wird. Auf diese Weise wird eine Übersteuerung des Verstärkers durch ein LO-Signal vom Geber verhindert und ein hoher Dynamikbereich des Verstärkers für das eigentliche Nutzsignal sichergestellt. Die Kompensation erfolgt in der Weise, daß über ein rückführendes Glied für die mindestens zwei Frquenzkomponenten Kompensationsgrößen für das LO-Signal gebildet werden, die in einem dem Verstärker vorgeschalteten Summierungsglied vom Gebersignal substrahiert werden. Im übrigen arbeitet dieses bekannte Verfahren mit festeingestellten Parametern bei der Signalverarbeitung.

Der Erfindung liegt die Aufgabe zugrunde, ein Verfahren und eine Durchführungsanordnung der eingangs genannten Art zu entwickeln, bei welchen die Kompensation des LO-Signals in einem weiten LO-Bereich mit ausreichender Genauigkeit erfolgt.

Zur Lösung dieser Aufgabe wird ein Verfahren gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen des Verfahrens nach der Erfindung sind in den Ansprüche 2 bis 8 genannt.

Ein Anordnung zur Durchführung des Verfahrens nach der Erfindung ist gekennzeichnet durch die im Anspruch 9 genannten Merkmale.

Eine vorteilhafte Ausgestaltung dieser Anordnung ist im Anspruch 10 genannt.

Die Erfindung kann als ein Optimierungsverfahren betrachtet werden, durch welches beispielsweise die oben genannten bekannten Verfahren ergänzt und verbessert werden können.

Anhand der in den Figuren gezeigten Ausführungsbeispiele soll die Erfindung näher erläutert werden. Es zeigen
- Figur 1: eine prinzipielle Darstellung der physikalischen Verhältnisse beim Arbeiten mit einem Geber der hier behandelten Art,
- Figur 2: ein Diagramm, welches das Ausgangssignal eines Gebers als Funktion des LO-Abstands zeigt,
- Figur 3: ein Ausführungsbeispiel einer Anordnung zur Durchführung des Verfahrens gemäß der Erfindung.

Die Anordnung dient in erster Linie zur Überprüfung von Prüfgegenständen hinsichtlich in oder an diesen Prüfgegenständen vorhandenen Veränderungen, wie zum Beispiel Risse. Die Anordnung enthält zumindest einen Geber 1, der mit Signalen, zum Beispiel Strom, mit unterschiedlichen Frequenzkomponenten (Frequenzgehalt) gespeist wird, so daß Wirbelströme, zum Beispiel I_{H} und I_{L} mit entsprechenden Frequenzen im Prüfgegenstand 2 induziert werden. Dabei wird der elektrische Scheinwiderstand (Impedanz) des Gebers durch die induktive Kopplung zwischen dem Geber und dem Prüfgegenstand beeinflußt. Dies hat zur folge, daß zumindest zwei vom Geber direkt oder indirekt gelieferte Signale oder Signalkomplexe ganz oder teilweise verschiedenen Frequenzursprungs derart verarbeitet werden, zum Beispiel durch Rechenoperationen oder durch Kombination, daß die resultierende Ausgangsgröße (Resultat) innerhalb eines begrenzten Arbeitsbereiches als Funktion des Abstandes zwischen Geber und Prüfgegenstand konstant ist, so lange der Prüfgegenstand keine Veränderungen unterhalb oder in der Nähe des Gebers aufweist. Dieser Wert unterscheidet sich von dem entsprechenden Wert, der beim Auftreten einer Veränderung im oder am Prüfgegenstand gewonnen wird.

Insoweit unterscheidet sich die Erfindung nicht von den bekannten Anordnungen.

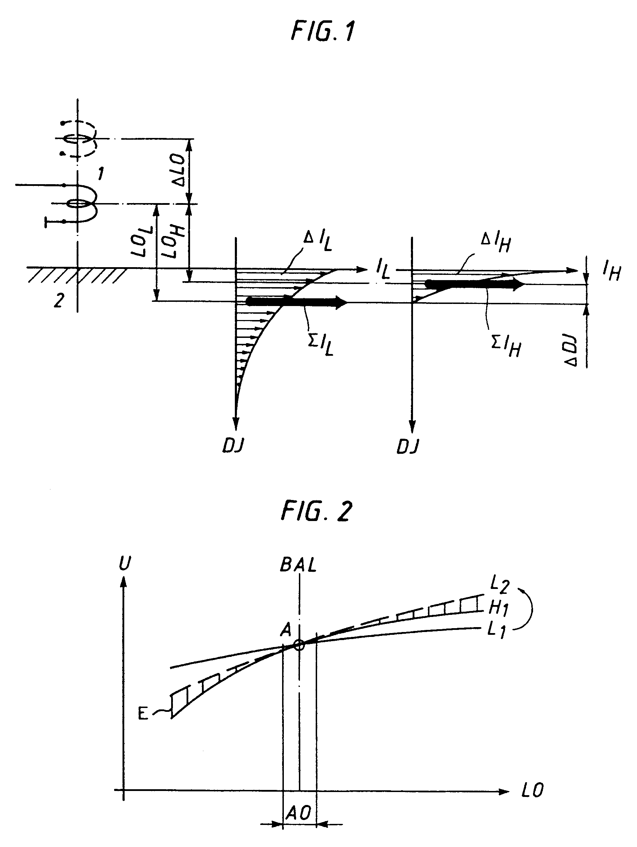

Für die weitere Beschreibung der Erfindung ist es zweckmäßig, ausgehend von Figur 1, eine etwas abweichende Definition des LO-Abstandes einzuführen, als sie bisher verwendet wurde. Bisher wurde der Abstand zwischen dem Geber und der Oberfläche des Prüfgegenstandes etwas vereinfacht als LO-Abstand bezeichnet.

Auch die Zunahme des Bedarfes, mit Frequenzen zu arbeiten, die einen größeren Frequenzbereich umfassen, rechtfertigt eine genauere Definition des LO-Abstandes gemäß der nachstehenden Erläuterung. Für die vorliegende Erfindung ist diese neue Definition von großer und grundlegender Bedeutung.

Es ist darauf hinzuweisen, daß diese Beschreibung sich sowohl auf eine Anordnung wie ein Verfahren bezieht und daß die folgenden Ausführungen sowohl für die Anordnung wie für das Verfahren gelten.

In Figur 1 ist der Geber 1 über der Oberfläche des Prüfgegenstandes 2 angeordnet. Der Geber wird beispielsweise mit einem Strom gespeist, der sich aus einem Strom mit einer hohen Frequenz H und einer niedrigen Frequenz L zusammensetzt. Durch den im Geber erzeugten magnetischen Fluß werden im Prüfgegenstand zwei Teilströme ΔI_{H} und ΔI_{L} mit entsprechenden Frequenzen induziert. Die Größe dieser Ströme ist im rechten Teil von Figur 1 dargestellt. Man erkennt, daß die Stromdichte mit zunehmender Eindringtiefe D_{J} in den Prüfgegenstand abnimmt. Wenn man sich vorstellt, daß sämtliche Teilströme für jede Frequenz durch einen fiktiven Summenstrom ΣI_{L} und ΣI_{H} für jede Frequenz ersetzt werden, so haben diese Ströme eine unterschiedliche Eindringtiefe. Die Differenz der Eindringtiefen ist in Figur 1 mit ΔD_{J} bezeichnet. Diese Summenströme beeinflußen den Geber in entsprechender Weise wie die Summe der Teilströme oder besser gesagt, in entsprechender Weise wie die Gesamtwirkung sämtlicher Teilströme. Da diese Beeinflussung von dem Abstand zwischen dem jeweiligen Summenstrom und dem Geber abhängt, wird für die vorliegende Erfindung der LO-Abstand als Abstand zwischen dem Geber und dem zu der jeweiligen Frequenz gehörenden Summenstrom definiert. In Fällen, in denen der Geber eine große Ausdehnung hat, kann auf gleiche Weise wie für die Teilströme beispielsweise ein fiktiver "Schwerpunkt" für den Geber eingeführt werden, auf den sich der LO-Abstand bezieht, was in Figur 1 geschehen ist. Dies bedeutet, das der LO-Abstand für verschiedene Frequenzen unterschiedlich ist. In Figur 1 kommen die beiden LO-Abstände LO_{H} und LO_{L} vor, wobei LO_{L} größer als LO_{H} ist.

Die Kopplung zwischen dem Geber und dem jeweiligen Summenstrom kann durch komplizierte mathematische Beziehungen beschrieben werden, worauf hier nicht eingegangen wird. Vielmehr wird von einer an sich sehr vereinfachenden Annahme ausgegangen, bei der jedoch die wesentliche grundsätzliche Wirkung richtig wiedergegeben wird und mit der die Vorteile der Erfindung gut erläutert werden können. Es wird angenommen, daß die Kopplung zwischen dem Geber und dem jeweiligen Summenstrom eine einfache inverse Funktion des LO-Abstandes ist. Da LO_{L} größer als LO_{H} ist, ist die Kopplung zwischen Geber und Prüfgegenstand für unterschiedliche Frequenzen verschieden. Dieser unterschiedlche Kopplungsgrad ist die wesentliche Ursache dafür, daß die auf unterschiedliche Frequenzen beruhenden Signale unterschiedliche und nicht gleiche Veränderungen in Abhängigkeit des LO-Abstandes haben, was die Ursache für die schlechte Meßgenauigkeit usw. und die dadurch bedingten Begrenzungen der bekannten Anordnungen ist. Dies ist in Figur 2 veranschaulicht. Besonders dann, wenn das Verhältnis zwischen LO_{H} und ΔD_{J} klein ist, der Geber sich also nahe am Prüfgegenstand befindet, macht sich die Wirkung unterschiedlicher Eindringtiefe stark bemerkbar.

Figur 2 zeigt zwei Signale H₁ und L₁ des Gebers verschiedenen Frequenzvorsprungs als Funkton des LO-Abstandes.

Aus Figur 1 geht hervor, daß bei einer Verschiebung des Gebers 1 aus der voll ausgezogen dargestellten Lage in die gestrichelt dargestellte Lage sich der LO-Abstand für die beiden Frequenzen um den Wert ΔLO verändert, was auch dazu beiträgt, die H₁ -und die L₁-funktion voneinander zu trennen, ausgenommen eventuelle Kreuzungspunkte (z.B. aufgrund von Ausgleichungsverfahren usw.)

Indem man beispielsweise durch Änderung der Verstärkung des Signals mit der niedrigen Frequenz die Funktion L₁ in L₂ transformiert/verschiebt, kann die Differenz E zwischen H1 und L₂ in einem begrenzten Arbeitsbereich AO kleingemacht werden. In dem Bereich AO ist es mit anderen Worten möglich, die LO-Abhängigkeit verhältnismäßig wirksam zu unterdrücken. Dies gilt für die meisten auf der Mehrfrequenztechnik basierenden bekannten Anordnungen.

Aus der SE-A-8302738-3 geht hervor, daß es vorteilhaft sein kann, mit Frequenzen, d.h. Trägerfrequenzen zu arbeiten, die sich verhältnismäßig stark voneinander unterscheiden (z.B. H/L >10). Dies hat zur Folge, daß die Differenz E zwischen den aktuellen Funktionen größer wird, wodurch der Arbeitsbereich AO verkleinert wird, was eine große praktische Begrenzung darstellt. Durch die Erfindung wird der Arbeitsbereich durch Reduzierung des Meßfehlers E vergrößert. Diese Reduzierung wird dadurch erreicht, daß die Signalverarbeitung, (zum Beispiel die Vektortransformation oder die dafür notwendige Berechnung) auch in Abhängigkeit des absoluten oder relativen LO-Abstandes erfolgt.

Eine einfache Ausführungsform erhält man dadurch, daß die Transformation von L₁ in die neue Lage L₂ dynamisch durchgeführt wird, d.h. so vorgenommen wird, daß L₁ unterschiedlich stark in Abhängigkeit des vorliegenden LO-Abstandes transformiert wird. In Figur 2 bedeutet dies, daß L₁ soweit transformiert wird, daß L₂ und H₁ bei dem vorliegenden LO-Abstand den gleichen Differentialquotienten, d.h. dieselbe Steigung in dem Arbeitsbereich haben.

Da der LO-Abstand in der Praxis sich oft kontinuierlich verändert, muß die Transformation nachfolgen, d.h. sie muß als Funktion des LO-Abstandes variieren. Die Transformation muß - mit anderen Worten - in Abhängigkeit eines oder mehrerer Vektoren dynamisch sein. Bekannte Anordnungn arbeiten mit fester Transformation, zum Beispiel Potentiometer einstellen, so daß hier von einer statischen Transformation gesprochen werden kann. Dieses statische Transformation bezieht sich dann auf die "Kleinsignalparameter", die innerhalb eines gewissen begrenzten LO-Abstandes gelten. Als Beispiel für solche bekannten Anordnungen können die von Libby beschriebenen Anordnungen und die US-A-4 303 885 genannt werden. Auch die SE-A-7 507 857 einschließlich Zusatzpatent ist ein Beispiel für eine statische Transformation durch ein sog. Normungsverfahren, das als eine Ausführungsform der Transformation zu betrachten ist.

In der Praxis kann es zweckmäßig sein, die vom Geber kommenden Signale momentan oder kontinuierlich auszubalancieren (auf einen bestimmten Wert einzustellen oder zu regeln). Ein Beispiel für eine solche Balancierkompensation zeigt die SE-A-7 813 344 (entspricht GB-A-2041535). Diese hat zur Folge, daß die Funktionen H₁ und L₁ einschl. L₂ in Figur 2 auch Regelfunktionen dieser Art einschließen können. Punkt A kann beispielsweise ein Balancierpunkt sein, der auf einen bestimmten LO-Abstand BAL bezogen ist, für den die Gebersignale auf Null eingestellt (ausbalanciert) wurden.

Eine Folge des erweiterten LO-Arbeitsbereiches besteht darin, daß die Kopplung zwischen Geber und Prüfgegenstand stärker variieren kann, als es bei den bekannten Anordnungen zulässig ist. Dies hat zur Folge, daß die zu erfassenden Veränderungen mit stark veränderlicher Größe erfaßt werden, je nachdem wie groß der gerade vorliegende LO-Abstand ist. Hierdurch ist es sehr schwer, ein gutes Signal/Stör-Verhältnis S/N bei der Messung zu erhalten.

Beispielsweise kann eine kleine oszillierende Verformung (oscm) auf einem Rohling bei kleinem LO-Abstand eine ebenso große Fehlersignalamplitude erzeugen wie ein großer Riß bei einem großen LO-Abstand und dadurch das Verhältnis S/N verschlechtern. Um dies zu verhindern, kann der Verstärkungsgrad und/oder das Bezugsniveau in Abhängigkeit des absoluten oder relativen LO-Abstand gesteuert oder geregelt werden. Das bedeutet, daß die Verstärkung des Fehlersignals oder des Bezugsniveaus (Schwellenniveau), mit welchem das Fehlersignal verglichen wird, eine Funktion des LO-Abstandes ist. Ein weiterer Vorteil dieses Verfahrens besteht darin, daß die durch die dynamische Transformation häufig verursachte Variation der Verstärkung verhältnismäßig einfach elimeniert werden kann.

Eine wichtige Einzelheit bei gewissen Anwendungen der Erfindung besteht darin, wie der LO-Abstand gemessen werden soll. Ein elegantes Verfahren besteht darin, denselben Geber für die LO-Messung und für die Erfassung einer Veränderung am Prüfgegenstand zu verwenden. In gewissen Fällen kann es jedoch angebracht sein, für die LO-Messung einen separaten Geber zu verwenden. Hierbei kann eine andere Technik als die Wirbelstrommessung in Betracht kommen. Beispielsweise bei der Suche nach Rissen an warmen Rohlingen können Temperaturschwankungen an der Oberfläche des Rohlings die Ermittlung des LO-Abstandes durch Wirbelstrommessung stören, so daß die LO-Messung mit einem separaten Geber durchgeführt werden kann, der zum Beispiel auf der Anwendung von Druckluft, einen Infrarotdetektor oder der Ausnutzung von Grenzlagen basiert.

In der SE-A-7 507 857 ist von Berechnung und Linearisierung die Rede. Hierbei handelt es sich jedoch um konventionelle Techniken, d.h. statischen Prinzipien, ohne Berücksichtigung irgendeiner Variablen. Diese bekannten Berechnungsverfahren erlauben auch nicht die Erweiterung des Arbeitsbereichs, wie es die vorliegende Erfindung gestattet.

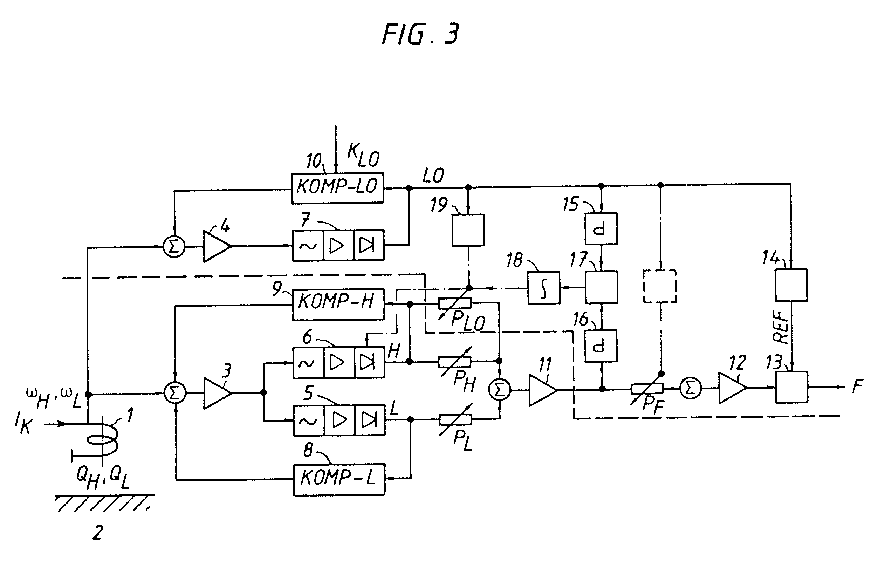

Figur 3 zeigt ein mögliches Ausführungsbeispiel gemäß der Erfindung, das im folgenden beschrieben wird:
Der Geber 1 wird von einem Strom- oder Spannungsgenerator mit einem Strom I_{K} gespeist, der aus zwei Teilströmen mit den Kreisfrequenzen ω_{H} und ω_{L} besteht, welche die magnetischen Flüsse φ_{H} und φ_{L} erzeugen, mit welchen der Geber abwechselnd auf den Prüfgegenstand 2 einwirkt. Am Geber, der sich also am Prüfgegenstand befindet, werden elektrische Signale, zum Beispiel Spannungen erzeugt, die der elektrischen Impedanz des Gebers proportional sind. Diese Geberspannung wird über Summierungspunkte Verstärkern 3 und 4 zugeführt. Nach Verstärkung des Signals im Verstärker 3 werden die beiden hinsichtlich ihrer Frequenz unterschiedlichen Komponenten über zwei Frequenzkanäle 5, 6 separiert, von denen einer hohe Frequenzen und der andere niedrige Frequenzen passieren läßt. Diese Frequenzkanäle enthalten Filter, Verstärker und phasengesteuerte Gleichrichter, deren Ausgangssignale mit H bzw. L in den Figuren 2 und 3 bezeichnet sind.

Die Ausgangssignale H und L werden auch auf Verstell- oder Regelglieder 8 und 9 gegeben die beispielsweise die hohen bzw. niedrigen Frequenzen oder Frequenzkomponenten des Gebersignals kontinuierlich verstellen (ausbalancieren). Die Zahl der verwendeten Frequenzen kann erhöht werden, wenn dies für den betroffenen Anwendungsfall zweckmäßig ist. Die H- und L-Signale sind über Potentiometer P_{H} und P_{L} an einen Verstärker 11 angeschlossen. Diese Potentiometer dienen als Berechnungsglieder im Transformationverfahren und haben im Prinzip die Funktion konstanter Faktoren. Es sei bereits hier bemerkt, daß es ein Teil der Erfindung ist, daß diese "konstanten" Faktoren in Abhängigkeit veränderlicher Größen variiert werden, sie also nicht länger reine Konstanten sind, abgesehen von ihrem augenblicklichen kurzzeitigen Verhalten. Werden H und L mit entgegengesetzter Polarität gewählt, so können sich die H- und L-Signale bei varierendem LO-Abstand im wesentlichen gegenseitig aufheben, wenn die P_{H}- und P_{L}-einstellungen zweckmäßig gewählt werden und der LO-Arbeitsbereich AO begrenzt ist, vorausgesetzt, daß der Prüfgegenstand keine Veränderungen enthält, die den Geber beeinflussen. Die Folge hiervon ist, daß das Ausgangssignal des Verstärkers 11 nahezu Null ist, d.h. die LO-Abhängigkeit ist unterdrückt. Wie hieraus und insbesondere aus Figur 2 hervorgeht, gründet sich das Meßprinzip auf ein sogenanntes Kleinsignalparameterverfahren.

Bei einem größeren Arbeitsbereich wird am Ausgang des Verstärkers 11 jedoch ein größeres Ausgangssignal auftreten, das sich störend auf den gewünschten Meßvorgang auswirkt. Der Grund dafür liegt darin, daß dabei der Bereich überschritten wird, in welchem das Kleinsignalverfahren anwendbar ist.

Bisher wurde nur der unterhalb der gestrichelten Linie in Figur 3 dargestellte Teil erläutert. Dieser Teil beschreibt die bekannte konventionelle Technik, und er kann als "Kleinsignalteil" bezeichnet werden.

Im folgenden wird der gegenüber dem Stand der Technik neue Teil der Figur 3 beschrieben, durch welchen das Kleinsignalverfahren eine dynamische Erweiterung erhält, durch welche beispielsweise der Arbeitsbereich merklich vergrößert wird bei im wesentlichen unveränderter Leistung.

Über den Verstärker 4 wird das Gebersignal den Gliedern 7 und 10 zugeführt, die im wesentlichen genauso wie der konventionelle H-Kanal aufgebaut sind. Der Unterschied besteht darin, daß der Regler 10 über den K_{LO}-eingang aktiviert und unwirksam gemacht werden kann. Dadurch, daß der Regelkreis 10 kurzfristig aktiviert wird, wenn sich der Geber beispielsweise in einer bestimmten Lage relativ zum Prüfgegenstand befindet, und dann die Balancierservoanordnung arretiert, nimmt das Ausgangssignal des Gliedes 7 ein Niveau an, das anschließend eine Funktion des LO-Abstandes zwischen Geber und Prüfgegenstand ist. Auf diese Weise wird also der LO-Vektor des Gebers gemessen. Dieses Signal ist in Figur 3 mit LO bezeichnet und stellt ein für die folgenden Erläuterungen wichtiges Steuersignal dar.

Betrachtet man die Potentiometer P_{H} und P_{L} als Mittel für eine vorgegebene Grobeinstellung, so kann leicht eine Feineinstellung vorgenommen werden, indem man beispielsweise ein oder mehrere zusätzliche Potentiometer mit diesen in Reihe oder parallel schaltet. In Figur 3 ist zu diesem Zweck ein hochohmigeres Potentiometer P_{LO} vorgesehen, mit welchem eine Feineinstellung und Korrektur vorgenommen werden kann. Gemäß einer einfachen Ausführungsform kann dieses Potentiometer P_{LO} kontinuierlich über ein Anpassungsglied 19 eingestellt werden, dessen Eingangssignal aus dem LO-Signal besteht. Dies hat zur Folge, daß die Transformation automatisch selbsteinstellend (adaptiv) in Abhängigkeit des absoluten oder relativen LO-Abstandes arbeitet, wodurch der Meßfehler (E in Figur 2) minimiert wird. Prinzipiell kann diese adaptive Arbeitsweise auch in bezug auf andere veränderliche, also nicht nur den LO-Abstand, angewendet werden, wodurch das Verfahren generellen Charakter erhält. Als Alternative zu der Einstellung des Potentiometers P_{LO} über das Glied 19 kann dieses Potentiometer auch in verfeinerter Art über das Glied 18 in Zusammenarbeit mit den Gliedern 15 bis 17 eingestellt werden. Diese Art der Einstellung bedeutet, daß der Differentialquotient (oder nur das Vorzeichen) des LO-Signals von dem Glied 15 abgetastet wird, was bedeutet, daß man auch die Richtung der Veränderung des LO-Signals berücksichtigt, d.h. ob der LO-Abstand größer oder kleiner wird. Durch das Glied 16 wird zugleich der Differentialquotient des Ausgangssignals des Verstärkers 11 abgetastet, also berücksichtigt, ob der Meßfehler größer oder kleiner wird. Das Ausgangssignal des Gliedes 16 speist den Integrator 18 über ein Glied 17, bei dem es sich um ein solches handeln kann, welches eine einfache von dem Glied 15 gesteuerte Kontaktfunktion hat. Wird für den Integrator 18 eine geeignete Zeitkonstante gewählt, so kann dadurch die Einstellung des Potentiometers P_{LO} automatisch justiert werden, und zwar im wesentlichen unabhängig von eventuellem Driften usw. in der LO-Messung. Es ist zu beachten, daß diese verfeinerte Einstellungsmethode auch eine adaptive Anpassung an die Oberflächenstruktur des Prüfgegenstandes bedeutet, beispielsweise derart, daß der Einfluß von Oszillationsverformungen usw. besser unterdrückt werden kann.

Das Glied 19 kann eine funktionsumwandelnde Charakteristik haben, um eine optimale Steuerfunktion, d.h. Einstellungsverlauf für das Potentiometer P_{LO}, zu bekommen.

Da das Ausgangssignal des Verstärkers 11 außer den Meßfehlern auch Informationen über eventuelle Veränderungen des Prüfgegenstandes enthält, muß die Zeitkonstante des Integrators 18 mit Rücksicht hierauf gewählt werden. Die differenzierenden Glieder 15 und 16 sind in gewissen Fällen entbehrlich, beispielsweise wenn die Regelkreise 8 und 9 kontinuierlich und schnell arbeiten, was einen differenzierenden Effekt entsprechend dem der differenzierenden Glieder hat. In gewissen Fällen ist es zweckmäßig, nur die Glieder 15 und 16 als Vorzeichenabtaster zu benutzen und den Wert der Ableitung zu kennen.

In der gleichen Weise, wie das Potentiometer P_{LO} von dem LO-Signal über die Glieder 18 und 19 gesteuert werden kann, können auch die phasengesteuerten Gleichrichter von diesen Gliedern gesteuert werden. Beispielsweise kann, wie in Figur 3 angedeutet, die Phasensteuerung des Frequenzkanals 6 direkt oder indirekt durch das LO-Signal gesteuert, zum Beispiel feinjustiert, werden. Dies bedeutet, daß einer oder mehrere der zum Transformationsverfahren gehörenden Vektoren sowohl hinsichtlich ihrer Größe wie ihrer Richtung als Funktion einer veränderlichen, wie beispielsweise des LO-Abstands, verstellt werden kann/können.

Das vom Verstärker 11 gelieferte Signal wird in dem Glied 12 verstärkt, wobei der Begriff Verstärkung auch eine Dämpfung einschließt. Die Verstärkung wird durch den Wert des Potentiometers PF bestimmt. Wie man erkennt, wird auch diese Einstellung direkt oder indirekt vom LO-Signal gesteuert.

Das Ausgangssignal des Verstärkers 12 wird einem Vergleichsglied 13 zugeführt, auf dessen zweiten Eingang über ein Anpassungslied 14 das LO-Signal gegeben wird (Signal REF). Das Ausgangssignal F des Vergleichsgliedes 13 zeigt daher mit einer im wesentlichen konstanten Empfindlichkeit eine am Prüfgegenstand vorliegende Veränderung von gewisser Größe an, und zwar innerhalb angemessener Grenzen unabhängig vom LO-Abstand.

Die vorliegende Erfindung kann auch als ein Verfahren betrachtet werden, um die Signalverarbeitung einschließlich der Transformationfunktion in Abhängigkeit einer oder mehrerer Veränderlicher fortlaufend und kontinuierlich adaptiv zu optimieren, wobei die Erfindung als ein generelles Verfahren zu sehen ist.

Das beschriebene Verfahren kann in vorteilhafter Weise auch mit Computern und zugehöriger Anpassungselektronik ausgeführt werden, was ebenfalls Teil der Erfindung ist.

Die in den Figuren dargestellten Gegenstände sind nur prinzipieller Natur und nicht maßstabsgerecht dargestellt.

Die Erfindung kann im Rahmen des offenbarten allgemeinen Erfindungsgedanken in vielfacher Weise variiert werden.

Die Beschreibung ist nur als prinzipielles Beispiel dafür zu betrachten, wie die Erfindung realisiert werden kann.

Einige in der vorgenannten Beschreibung enthaltenen Begriffe haben folgenden Inhalt:
Ein "Geber" ist beispielsweise ein einen magnetischen Fluß erzeugendes und erfassendes Glied, welches aus zumindest einer Spule oder Windung oder dergleichen besteht. Grundsätzlich kann eine stromdurchflossene Spule durch ihre Amperewindungszahl sowohl flußerzeugend sein als auch durch ihre Spulenimpedanz flußerfassend sein. Der Geber kann aber auch aus einer stromgespeisten Primärspule und einer abtastenden Sekundärspule bestehen, in welche eine elektrische Spannung induziert wird. Diese Spannung enthält dann auch Informationen über Störungen im Ausbreitungsfeld des Wirbelstromes usw.

Als "Prüfgegenstände" kommen beispielsweise in Betracht: Rohlinge, Bleche, Rohre, Drähte, Stangen, Profile usw.

Mit "Veränderungen" sind z.B. Defekte, Risse, Poren, Abblätterungen, Löcher usw. gemeint.

Unter "Störgröße" oder "Veränderliche" wird eine Größe verstanden, durch deren Veränderung die Messung der gesuchten "Veränderungen" am Prüfgegenstand verfälscht wird. Die wichtigste dieser Störgrößen ist der Abstand zwischen Geber und Prüfgegenstand.

Mit "Differenz" ist zum Beispiel die Differenz zwischen H1 und L2 in Figur 2 gemeint. Als Differenz wird jedoch auch der Quotient, d.h. das Verhältnis aus beispielsweise H₁ und L₂ in Figur 2 bezeichnet.

Als "Konstante" wird eine innerhalb eines angemessenen Arbeitsbereiches im wesentlichen konstante Größe bezeichnet.

Als "Frequenz" ist meistens die Frequenz oder Frequenzkomponente des den Geber speisenden Stromes gemeint. Gelegentlich wird diese Frequenz auch als Trägerfrequenz bezeichnet, da die zu messenden Veränderungen dieser Frequenz oft überlagert sind. Auch Frequenzkomplexe können als Frequenz bezeichnet sein.

Mit "lift -off" (LO) ist normalerweise der Abstand zwischen Geber und Prüfgegenstand gemeint. Im vorliegenden Falle ist dieser Begriff genauer definiert, und zwar als Abstand zwischen dem Geber und dem für die betreffende Frequenz geltenden Summenstrom.

Mit "Transformation" ist zum Beispiel die Vektortransformation einschließlich Varianten bezeichnet, wie sie beispielsweise von Libby in der US-A-4 303 885 und in der SE-A-7 507 857 einschließlich Zusatzpatent beschrieben wird.

Als ein Beispiel für die Transformation kann genannt werden, daß Signale, die ganz oder teilweise einen verschiedenen Frequenzursprung haben, auf solche Weise verarbeit und kombiniert werden, daß das Ergebnis eine Unterdrückung mindestens eines unerwünschten Signals oder einer Variablen, zum Beispiel die LO-Abhängigkeit, zuläßt oder aufweist.

Mit "Berechnung" sind zum Beispiel die Ermittlung der Konstanten gemeint, die in dem Transformationverfahren verwendet werden und die beispielsweise von den Potentiometereinstellungen zur Einstellung von Verstärkungsgraden dargestellt werden.

Mit "relativem" LO-Abstand ist zum Beispiel der Abstand von einem Bezugspunkt gemeint, wobei es sich meistens um den Abstand handelt, für den die Gebersignale momentan ausbalanciert wurden. Es handelt sich also um eine Art Ausgangslage für die Messung, mit der in gewissen Fällen leichter gearbeitet werden kann als mit dem "absoluten" LO-Abstand, der den wirklichen LO-Abstand bezeichnet.

Unter H wird eine hohe Frequenz oder ein Signal verstanden, daß von einer hohen Frequenz/ Trägerfrequenz herrührt oder von dieser dominiert wird.

Unter L wird eine niedrige Frequenz oder ein Signal verstanden, das von einer niedrigen Frequenz/Trägerfrequenz herrührt oder von dieser dominiert wird.

Beispielsweise bei der Feststellung von Rissen in warmen Rohlingen, zum Beispiel sogenannten slabs, wird der Geber mit Hilfe beispielsweise eines Industrieroboters schnell über die Oberfläche des Rohlings geführt. In Folge der Oszillationsverformungen und anderer Unebenheiten in oder auf der Oberfläche des Rohlings wird der Abstand zwischen Geber und Rohling infolge der Relativbewegung zwischen Geber und Oberfläche des Rohlings schnell und stark in unregelmäßiger Weise verändert. Hierdurch ist es sehr schwer, vielleicht sogar unmöglich, mit einer rein statischen Transformation und Verstärkung eine ausreichenden Meßgenauigkeit auf unebenen Flächen zu erreichen.

Die grundlegende Ursache hierfür ist also, daß die Summenströme für unterschiedliche Frequenzen unterschiedliche Kopplungen zum Geber haben, was wiederum auf den verschiedenen Abständen zum Geber beruht.

Es ist ferner zu sagen, daß sich die zweiten Ableitungen für den Kopplungsgrad der jeweiligen Frequenz zwischen Geber und Prüfgegenstand voneinander unterscheiden, so daß eine statische Transformation nur für den LO-Abstand gut zu gebrauchen ist, auf den sich die Transformationseinstellung bezieht. Mit Transformation ist hier natürlich das ganze Transformationsverfahren einschließlich der zugehörigen Unterdrückung eines unerwünschten Signals (beispielsweise durch Summierung usw.) gemeint. Dadurch, daß man das Transformationsverfahren und die Verstärkung des Fehlersignals, ausgehend von dem gerade vorliegenden Abstand zwischen Geber und Prüfgegenstand laufend selbsttätig korrigiert, kann eine optimale Transformation über einen größeren LO-Abstand vorgenommen werden. Es handelt sich, mit anderen Worten, um ein dynamisches Verfahren.

Da die Erfindung in ihrer komplexeren Anwendung auch eine Kombination eines dynamischen Transformationsverfahrens einschließlich zugehöriger Unterdrückung unerwünschter Signale und einer dynamischen Verstärkungsjustierung umfaßt, wird dies in der Bezeichnung Signalverarbeitung zusammengefaßt.

Die SE-A-7 507 857 beschreibt eine Anordnung, bei der man nur zwei von zwei verschiedenen Frequenzen herrührenden Signale benötigt, um die LO-Abhängigkeit zu unterdrücken. Diese Signale werden durch die sogenannte Normung im Verhältnis zueinander bewertet. In diesem Falle bedeutet die Transformation nach der vorliegenden Erfindung beispielsweise nur, daß die Normeinstellung dynamisch justiert wird.

Es ist wichtig, darauf hinzuweisen, daß die vorliegende Erfindung auch Verfahren und Anordnungen umfaßt, bei welchen die Beeinflussung des Gebers durch den Prüfgegenstand auf indirekte Weise gemessen wird, d.h. daß Änderungen der Geberimpedanz usw. in Form von beispielsweise Frequenzänderungen direkt oder indirekt in Abhängigkeit von der elektrischen Impedanz des Gebers gemessen werden. Ein Beispiel einer solchen Anordnung besteht darin, daß der Geber Teil eines selbstschwingenden Oszillators ist, wobei die Impedanzänderungen des Gebers dann direkt in Änderungen der Oszillatorfrequenz umgewandelt werden, die dann leicht erfaßt und transformiert werden können.

## Patentansprüche

1. Verfahren zum Prüfen und/oder Messen von elektrisch leitenden Prüfgegenständen auf Veränderungen in oder an dem Prüfgegenstand unter Verwendung mindestens eines
Gebers, der ein magnetisches Wechselfeld erzeugt, welches mindestens zwei Komponenten unterschiedlicher Frequenz enthält und im Prüfgegenstand Ströme induziert, durch welche der Geber von dem Prüfgegenstand über die induktive Kopplung zwischen Geber und Prüfgegenstand beeinflußt wird,
wobei mindestens zwei vom Geber direkt oder indirekt gelieferte Signale mit teilweise oder vollständig unterschiedlichem Frequenzinhalt über je einen Kanal (6,P_{H}; 5,P_{L}) mit zugeordneten Regler (8,9) mittels Filtrierung separiert und beispielsweise durch Gleichrichtung, Berechnung, Kombination und Summierung derart verarbeitet werden,
daß die aus den mindestens zwei Signalen gewonnene Ausgangsgröße (Resultat) vom Abstand des Gebers vom Prüfgegenstand unabhängig ist und sich verändert, wenn in dem vom Geber erfaßten Bereich des Prüfgegenstandes Veränderungen auftreten,
**dadurch gekennzeichnet**,
daß die Verarbeitung der genannten vom Geber gelieferten mindestens zwei Signale als Funktion mindestens einer veränderlichen Größe erfolgt, indem das Gebersignal einem zusätzlichen Kanal (7) mit zugeordnetem Regler (10) zugeführt wird, welcher im wesentlichen in gleicher Weise arbeitet wie die genannten mindestens zwei Kanäle mit ihren Reglern, jedoch mit dem Unterschied, daß der Regler (10) für diesen zusätzlichen Kanal (7) nur zu bestimmten Zeiten aktiviert wird, beispielsweise dann, wenn der Geber eine bestimmte Lage relativ zur Oberfläche des Prüfgegenstandes einnimmt,
und daß die Ausgangsgröße dieses zusätzlichen Kanals die Signalverarbeitung der Gebersignale in den mindestens zwei genannten Kanälen (5,6) so beeinflußt, daß die Unterdrückung des LO-Signals über einen relativ großen LO-Bereich hinreichend gut ist.

2. Verfahren nach Anspruch 1, **dadurch gekennzeichnet**, daß die Ausgangsgröße des genannten zusätzlichen Kanals Parameter in den mindestens zwei Kanälen (6,P_{H}; 5,P_{L}) steuert.

3. Verfahren nach Anspruch 1, **dadurch gekennzeichnet**, daß das dem zusätzlichen Kanal (7) zugeführte Gebersignal mit einem zusätzlichen Geber gemessen wird.

4. Verfahren nach einem der vorhergehenden Ansprüche, **dadurch gekennzeichnet**, daß der zeitliche Differentialquotient des Abstandes zwischen Geber und Prüfgegenstand (LO-Abstand) ausschließlich oder zusätzlich zur automatischen Justierung der Signalverarbeitungsfunktion, z.B. der Transformation, verwendet wird.

5. Verfahren nach einem der vorhergehenden Ansprüche, **dadurch gekennzeichnet**, daß das von einer Veränderung im oder am Prüfgegenstand herrührende Fehlersignal (Meßsignal) automatisch in Abhängigkeit des Abstandes zwischen Geber und Prüfgegenstand verstärkt oder gedämpft wird.

6. Verfahren nach einem der vorhergehenden Ansprüche, **dadurch gekennzeichnet**, daß das von einer Veränderung, z.B. einem Riß, im oder am Prüfgegenstand herrührende Gebersignal mit einer Bezugsgröße, zum Beispiel einem Niveau, verglichen wird, die zumindest auch eine Funktion des Abstandes zwischen Geber und Prüfgegenstand ist.

7. Verfahren nach einem der vorhergehenden Ansprüche, **dadurch gekennzeichnet**, daß die Abhängigkeit der Signalverarbeitung, zum Beispiel der Transformation, von dem Abstand zwischen Geber und Prüfgegenstand, in Gestalt einer automatischen Feinjustierung erfolgt, welche einer im Voraus eingestellten Grobeinstellung überlagert wird.

8. Verfahren nach einem der vorhergehenden Ansprüche, **dadurch gekennzeichnet**, daß die Parameterverstellung durch Verstellung eines Potentionmeters (P_{LO}) oder des Steuerwinkels eines phasengesteuerten Gleichrichters erfolgt.

9. Anordnung zur Durchführung des Verfahren nach einem der vorhergehenden Ansprüche mit mindestens einem
Geber (1), der ein magnetisches Wechselfeld erzeugt, welches mindestens zwei Komponenten unterschiedlicher Frequenz enthält und im Prüfgegenstand Ströme induziert, durch welche der Geber von dem Prüfgegenstand über die induktive Kopplung zwischen Geber und Prüfgegenstand beeinflußt wird,
wobei der Geber direkt oder indirekt an mindestens zwei Kanäle (6,P_{H}; 5,P_{L}) mit je einem zugeordneten Regler (8,9) angeschlossen ist, welche Kanäle je ein Gebersignal mit unterschiedlichem Frequenzinhalt mittels Filtrierung separieren und die mindestens zwei Gebersignale, beispielsweise durch Gleichrichtung, Berechnung, Kombination und Summierung, derart verarbeiten,
daß die aus den mindestens zwei Signalen gewonnene Ausgangsgröße (Resultat) vom Abstand des Gebers vom Prüfgegenstand unabhängig ist und sich verändert, wenn in dem vom Geber erfaßten Bereich des Prüfgegenstandes Veränderungen auftreten,
**dadurch gekennzeichnet**,
daß zur Verarbeitung der genannten vom Geber gelieferten mindestens zwei Signale als Funktion mindestens einer veränderlichen Größe der Signalausgang des Gebers (1) an einen zusätzlichen Kanal (7) mit einem weiteren zugeordneten Regler (10) angeschlossen ist, welcher im wesentlichen in gleicher Weise arbeitet wie die genannten mindestens zwei Kanäle mit ihren Reglern, jedoch mit dem Unterschied, daß der weitere Regler (10) für diesen zusätzlichen Kanal (7) nur zu bestimmten Zeiten aktiviert wird, beispielsweise dann, wenn der Geber eine bestimmte Lage relativ zur Oberfläche des Prüfgegenstandes einnimmt, und daß der Signalausgang dieses zusätzlichen Kanals derart zur Beeinflussung der Gebersignale in den mindestens zwei genannten Kanälen (5,6) geschaltet ist, daß die Unterdrückung des LO-Signals über einen relativ großen LO-Bereich hinreichend gut ist.

10. Anordnung nach Anspruch 9, **dadurch gekennzeichnet**, daß die Ausgangsgröße des genannten zusätzlichen Kanals so geschaltet ist, daß sie zumindest einen Parameter in den mindestens zwei Kanälen (6,P_{H}; 5,P_{L}) steuert.

## Claims

1. Method for testing and/or measuring of electrically conductive test objects for changes in or on the test object by using at least one transducer which generates in alternating magnetic field comprising at least two components of different frequencies and inducing currents in the test object by which the transducer is influenced by the test object via the inductive coupling between the transducer and the test object,
by which method at least two signals, delivered directly or indirectly from the transducer and having partially or completely different frequency contents, are separated by means of filtering via one channel each (6,P_{H}; 5,P_{L}) with an associated regulator (8, 9) and which signals are processed, for example, by rectification, calculation, combination and summation in such a way,
that the output signal (result) obtained from said at least two signals is independent on the distance of the transducer from the test object and varies on the occurrence of changes in the area of the test object covered by the transducer,
**characterized** in that
the processing of said at least two signals delivered by the transducer occurs as a function of at least one variable quantity by supplying the transducer signal to an additional channel (7) with an associated regulator (10), which channel essentially operates in the same manner as said at least two channels with their regulators, however, with the difference that the regulator (10) of this additional channel (7) is activated only during certain time intervals, for example, when the transducer assumes a certain position relative to the surface of the test object and that the output signal of this additional channel effects the signal processing of the transducer signals in said at least two channels (5, 6) in such a way that the suppression of the LO-Signal is sufficiently adequate over a relatively large LO-area.

2. Method according to claim 1 **characterized** in that the output signal from said additional channel controls parameters of said at least two channels (6,PH; 5,PL).

3. Method according to claim 1, **characterized** in that the transducer signal supplied to said additional channel (7) is sensed by an additional transducer.

4. Method according to any of the preceding claims, **characterized** in that the time derivative of the distance between the transducer and the test object (LO-distance) is used exclusively or additionally for automatic adjustment of the signal processing function, for example of the transformation.

5. Method according to any of the preceding claims, **characterized** in that the fault signal (measuring signal) originating from a change in or on the test object is automatically amplified or dampened in dependence on the distance between the transducer and the test object.

6. Method according to any of the preceding claims, **characterized** in that the transducer signal originating from a change, for example a crack, in or on the test object is compared with a reference quantity, for example a level value, which is at least also a function of the distance between the transducer and the test object.

7. Method according to any of the preceding claims, **characterized** in that the dependence of the signal processing, for example the transformation, on the distance between the transducer and the test object occurs as an automatic fine-adjustment which is superimposed on a coarse-adjustment made in advance.

8. Method according to any of the preceding claims, **characterized** in that said parameter adjustment is effected by setting a potentiometer (P_{LO}) or the control angle of the phase-sensitive rectifier.

9. Device for carrying out the method according to any of the preceding claims with at least one transducer (1), which generates in alternating magnetic field comprising at least two components of different frequencies and inducing currents in the test object by which the transducer is influenced by the test object via the inductive coupling between the transducer and the test object,
with the transducer being connected directly or indirectly to at least two channels (6,P_{H}; 5,P_{L}) each with an associated regulator (8, 9), with each of said channels separating, by means of filtering, a transducer signal of different frequency content and with the two channels processing said at least two transducer signals, for example by rectification, calculation, combination and summation in such a way,
that the output signal (result) obtained from said at least two signals is independent on the distance of the transducer from the test object and varies on the occurrence of changes in the area of the test object covered by the transducer,
**characterized** in that
for processing of said at least two signals delivered by the transducer as a function of at least one variable quantity the signal output of the transducer (1) is connected to an additional channel (7) with a further associated regulator (10), which channel essentially operates in the same manner as said at least two channels with their regulators, however, with the difference that said further regulator (10) of said additional channel (7) is activated only during certain time intervals, for example, when the transducer assumes a certain position relative to the surface of the test object and that the signal output of said additional channel is connected to effect the signal processing of the transducer signals in said at least two channels (5, 6) in such a way that the suppression of the LO-Signal is sufficiently adequate over a relatively large LO-area.

10. Method according to claim 9, **characterized** in that the output signal from said additional channel is connected in such a way as to control at least one parameter of said at least two channels (6,PH; 5,PL).

## Revendications

1. Procédé de contrôle et/ou de mesure de spécimens électriquement conducteurs dans le cas de variations dans ou sur le spécimen, moyennant l'utilisation d'au moins un
capteur qui produit un champ magnétique alternatif qui contient au moins deux composantes ayant des fréquences différentes et induit dans le spécimen, des courants au moyen desquels le capteur est influencé par le spécimen, par l'intermédiaire du couplage inductif entre le capteur et le spécimen,
au moins deux signaux délivrés directement ou indirectement par le capteur et possédant des contenus en fréquences partiellement ou complètement différents, étant séparés par filtrage par l'intermédiaire respectivement d'un canal (6,P_{H}; S,P_{L}) auquel est associé un régulateur (8,9), et étant traités par exemple par redressement, calcul, combinaison et sommation de telle sorte
que la grandeur de sortie (résultat) obtenue à partir d'au moins deux signaux est indépendante de la distance entre le capteur et le spécimen et varie lorsque des variations apparaissent dans la région du spécimen, détectée par le capteur,
caractérisé par le fait
que le traitement desdits au moins deux signaux délivrés par le capteur s'effectue en fonction d'au moins une grandeur variable, par le fait que le signal du capteur est envoyé à un canal supplementaire (7), auquel est associé le régulateur (10) et qui travaille essentiellement de la même manière que lesdits au moins deux canaux pourvus de leurs régulateurs, mais à cette différence près que le régulateur (10) pour ce canal supplémentaire (7) est activé uniquement à des instants déterminés, par exemple lorsque le capteur prend une position déterminée par rapport à la surface du spécimen, et
que la grandeur de sortie de ce canal supplémentaire influe le traitement des signaux du capteur dans lesdits au moins deux canaux (5,6) de sorte que la suppression du signal LO dans une gamme de distances LO relativement étendue est suffisamment bonne.

2. Procédé suivant la revendication 1, caractérisé par le fait que la grandeur de sortie dudit canal supplémentaire commande des paramètres dans les au moins deux canaux (6,P_{H}; 5,P_{L}).

3. Procédé suivant la revendication 1, caractérisé par le fait que le signal du capteur, qui est envoyé au canal supplémentaire (7), est mesuré à l'aide d'un capteur supplémentaire.

4. Procédé suivant l'une des revendications précédentes, caractérisé par le fait qu'on utilise le quotient différentiel dans le temps de la distance entre le capteur et le spécimen (distance LO) exclusivement ou en plus de l'ajustement automatique de la fonction de traitement des signaux, par exemple la transformation.

5. Procédé caractérisé par le fait que le signal d'erreur (signal de mesure), qui est basé sur une modification dans ou sur le spécimen, est amplifié ou atténué automatiquement en fonction de la distance entre le capteur et le spécimen.

6. Procédé selon l'une des revendications précédentes, caractérisé par le fait que le signal du capteur, qui est produit par une modification, par exemple une fissure dans ou sur le spécimen, est comparé à une grandeur de référence, par exemple à un niveau, qui est au moins également une fonction de la distance entre le capteur et le spécimen.

7. Procédé suivant l'une des revendications précédentes, caractérisé par le fait que la dépendance du traitement du signal, par exemple de la transformation, vis-à-vis de la distance entre le capteur et le spécimen est obtenue sous la forme d'un ajustement automatique précis, qui est superposé à un réglage approximatif exécuté par avance.

8. Procédé suivant l'une des revendications précédentes, caractérisé en ce que le réglage des paramètres est réalisé au moyen du réglage d'un potentiomètre (P_{LO}) ou de l'angle de commande d'un redresseur à phase commandée.

9. Dispositif pour la mise en oeuvre du procédé suivant l'une des revendications précédentes, comportant au moins
un capteur (1), qui produit un champ magnétique alternatif qui contient au moins deux composantes ayant des fréquences différentes et induit, dans le spécimen, des courants, au moyen desquels le capteur est influencé par le spécimen, par l'intermédiaire du couplage inductif entre le capteur et le spécimen,
le capteur étant raccordé directement ou indirectement à au moins deux canaux (6,PH; 5,PL), auxquels sont associés des régulateurs respectifs (8,9) et qui séparent, par filtrage, des signaux respectifs du capteur possédant des contenus différents en fréquences et qui traitent au moins deux signaux du capteur, par exemple par redressement, calcul, combinaison et sommation, de telle sorte
que la grandeur de sortie (résultat) obtenue à partir des au moins deux signaux est indépendante de la distance entre le capteur et le spécimen et varie lorsque des variations apparaissent dans la région, détectée par le capteur, du spécimen,
caractérisé par le fait
que pour le traitement desdits au moins deux signaux délivrés par le capteur en fonction d'au moins une grandeur variable, la sortie du signal du capteur (1) est raccordée à un canal supplémentaire (7), auquel est associé un autre régulateur (10) qui travaille essentiellement de la même manière que lesdits au moins deux canaux pourvus de leurs régulateurs, mais à cette différence près que le régulateur (10) pour ce canal supplémentaire (7) est activé uniquement à des instants déterminés, par exemple lorsque le capteur prend une position déterminée par rapport à la surface du spécimen, et
que la grandeur de sortie de ce canal supplémentaire influe le traitement des signaux du capteur dans lesdits au moins deux canaux (5,6) de sorte que la suppression du signal LO dans une gamme de distances LO relativement étendue, est suffisamment bonne.

10. Dispositif suivant la revendication 9, caractérisé par le fait que la grandeur de sortie dudit canal supplémentaire est raccordée de telle sorte qu'elle commande au moins un paramètre dans les au moins deux canaux (6,P_{H}; 5,P_{L}).
